# EUROPÄISCHE PATENTSCHRIFT

(11) **EP 0 921 849 B1**
(45) Veröffentlichungstag und Bekanntmachung des Hinweises auf die Patenterteilung: **04.07.2001**
(21) Anmeldenummer: 97937461.8
(22) Anmeldetag: 18.08.1997
(51) Int. Cl.: B01D 53/32, B01D 53/92, F01N 3/02

(54) **VERFAHREN UND VORRICHTUNG ZUR REINIGUNG VON STICKOXIDHALTIGEN ABGASEN**
PROCESS AND APPARATUS FOR PURIFICATION OF NITROGEN OXIDES CONTAINING EXHAUST GASES
PROCEDE ET DISPOSITIF POUR LA PURIFICATION DE GAZ D'ECHAPPEMENT CONTENANT DES OXIDES D'AZOTE

(30) Priorität: 30.08.1996 DE 19635232
(43) Veröffentlichungstag der Anmeldung: 16.06.1999
(73) Patentinhaber: SIEMENS AKTIENGESELLSCHAFT, 80333 München (DE)
(72) Erfinder: HAMMER, Thomas, D-91334 Hemhofen (DE); KIESER, Jörg, D-91301 Forchheim (DE)
(86) Internationale Anmeldenummer: DE9701768
(87) Internationale Veröffentlichungsnummer: WO9808592

(56) Entgegenhaltungen:
- EP-A- 0 626 505
- EP-A- 0 627 263
- WO-A-97/03746
- US-A- 3 562 127
- US-A- 4 657 738

## Beschreibung

Die Erfindung bezieht sich auf ein Verfahren zur Reinigung von stickoxidhaltigen Abgasen, insbesondere in einem Abgas eines Verbrennungsmotors. Daneben bezieht sich die Erfindung auch auf eine Vorrichtung zur Durchführung eines derartigen Verfahrens.

Wegen der überwiegend im Sommer in bodennahen Luftschichten auftretenden Ozonbildung aus Stickoxiden besteht dringender Bedarf an Maßnahmen, die die Stickoxide aus den Abgasen von Verbrennungsmotoren wirkungsvoll beseitigen. Für den mit der Luftzahl Λ=1 laufenden Ottomotor entfernt der 3-Wege-Katalysator neben den Stickoxiden auch unverbrannte Kohlenwasserstoffe und Kohlenmonoxid. Für den Dieselmotor und den Magermotor (d.h. einen mit Luftzahlen Λ>1 arbeitenden Ottomotor) kann dieser Katalysator wegen des hohen Sauerstoffgehaltes im Abgas nicht eingesetzt werden, und bis jetzt gibt es noch keine für solche Abgase einsetzbaren Katalysatortyp mit hinreichender Schadstoff-Abbaurate und Lebensdauer.

Mit den vorveröffentlichten DE-A-42 31 581 und DE-A-44 16 676 sind bereits Plasmaverfahren zur Reinigung solcher Abgase mit hohem Sauerstoffgehalt vorgeschlagen worden. Weiterhin wurde in den nichtvorveröffentlichten DE-A-195 25 749 (Offenlegungstag : 16.01.97) und DE-A-195 25 754 (Offenlegangstag: 16.01.97) auch die Kombination von Gasentladung und katalytisch wirksamen Wandmaterialien vorgeschlagen, um gute Energie-Effizienz der Schadstoffzersetzung zu erreichen. Diese Kombination könnte auch deshalb sinnvoll sein, weil nach neueren Erkenntnissen zu vermuten ist, daß Stickoxide in stillen Entladungen oder anderen geeigneten Plasmaverfahren überwiegend zu HNO₂ und HNO₃ oxidieren statt in die gewünschten Produkte N₂ und O₂ reduziert zu werden. Es gibt jedoch inzwischen Untersuchungen zur plasmainduzierten Katalyse, die nur wenig Hoffnung auf katalytische Materialien machen, die in Kombination mit Gasentladungen die Reduktion von Stickoxiden zu N₂ und O₂ so stark fördern, daß die Oxidation zu Säuren vernachlässigt werden kann. Entweder fördert das katalytische Material auch die Oxidation, oder es findet eine oxidative Adsorption statt. Bei der oxidativen Adsorption wird die Oberfläche des Katalysators nach einiger Zeit gesättigt. Das bedeutet, daß eine solcher Katalysator z.B. in einer stationären Anlage durch Desorption regeneriert und die dabei freiwerdenden Schadstoffe unschädlich gemacht werden müssen. Umgehen läßt sich dieses Problem nach dem Stand der Technik nur, wenn dem Abgas Reduktionsmittel wie z.B. Kraftstoff in hoher Dosierung zugesetzt wird. Das wiederum erhöht den Kraftstoffverbrauch signifikant und führt zu Problemen mit der Emission von unvollständig umgesetztem Reduktionsmittel.

In anderen Versuchen konnten für Stickoxide zwar dadurch hohe Zersetzungsgrade realisiert werden, daß dem Abgas vor der Behandlung in der Entladung Ammoniak als Reduktionsmittel zugesetzt wurde. Damit handelt man sich aber folgende Probleme ein: Erstens müssen die mit einer solchen Abgasreinigung ausgerüsteten Kraftfahrzeuge Ammoniak oder eine verwandte, weniger bedenkliche Substanz, aus der Ammoniak gewonnen werden kann, mitführen, zweitens muß die Zugabe dieses nicht unbedenklichen Reduktionsmittels sehr genau geregelt werden, um Schlupf zu vermeiden, und drittens muß der als Produkt entstehende Ammoniumnitratstaub aus dem Abgas herausgefiltert werden. Wegen dieser Probleme wird diese Lösung von der Automobilindustrie z.Zt. nicht akzeptiert. Bisher ist kein weiteres flüssiges oder gasförmiges Reduktionsmittel bekannt, mit dem sich auch nur annähernd eine so effiziente Reduktion wie mit Ammoniak erzielen ließe.

Deutlich vielversprechender für die Dieselabgas-Reinigung sind Versuche mit aktivierten, evtl. mit katalytisch wirkenden Metallen dotierten Kohlefasern, die hier als festes Reduktionsmittel fungieren: Hiermit wurden NOₓ-Zersetzungsgrade von bis zu 70 % erzielt. Voraussetzung dafür ist jedoch die richtige Vorbehandlung der Faser und eine Abgastemperatur, die weder zu hoch noch zu niedrig ist. Bei zu niedriger Abgastemperatur, z.B. Kaltstart, Motor im Leerlauf oder bei geringer Last, ist der Zersetzungsgrad niedriger, bei zu hoher Abgastemperatur kommt es dagegen zu beschleunigter Oxidation der Faser durch Sauerstoff im Abgas, d. h. einen Abbrand der Faser. Aufgrund der thermischen Trägheit typischer Abgassysteme in Kraftfahrzeugen dürfte es kaum möglich und energetisch auch nicht sinnvoll sein, die Temperatur des Abgasreinigungselementes aktiv zu regeln. Damit besteht also Bedarf an einer Möglichkeit, die Reduktion von Stickoxiden durch Kohlefasern anders als durch die Temperatur zu steuern.

Aus der EP 0 621 263 A1 ist ein Verfahren zur Stickoxidreduzierung von Dieselabgas durch aktivierten Kohlenstoff bekannt, das mit einem Verfahren zur elektrostatischen Rußfilterung kombiniert ist. Für die Rußfilterung erfolgt durch Anlegen einer elektrischen Spannung eine Aufladung der Rußpartikel, um sie anschließend elektrostatisch abscheiden zu können. Schon allein aufgrund der Betriebsweise des elektrostatischen Rußfilters hat dieser keinen direkten Einfluß auf die Stickoxidreduktion. Ein indirekter Einfluß könnte darin bestehen, daß der im Filter gesammelte Ruß selbst als festes Reduktionsmittel arbeitet.

Aufgabe der Erfindung ist es demgegenüber, ein verbessertes Verfahren anzugeben, das für die Abgasreinigung von Kraftfahrzeugmotoren geeignet erscheint. Daneben soll eine geeignete Vorrichtung geschaffen werden.

Die Aufgabe ist erfindungsgemäß dadurch gelöst, daß das stickoxidhaltige Abgas durch ein mit nichtthermischen Gasentladungen beaufschlagtes Reaktorvolumen strömt und dabei ein oder mehrmals mit einem festen Reduktionsmittel in Kontakt gebracht wird, wodurch das Abgas zunächst angeregt und anschließend reduziert wird. Vorzugsweise werden als feste Reduktionsmittel Kohlefasern verwendet. Auch andere kohlenstoffhaltige Materialien sind als feste Reduktionsmittel erfindungsgemäß verwendbar. Vorteilhafterweise werden feste Reduktionsmittel nach Bedarf verbraucht und können daher nicht fehldosiert werden.

Bei einer spezifischen Vorrichtung zur Durchführung des erfindungsgemäßen Verfahrens hat ein Abgasreinigungselement einen Reaktor zur Beaufschlagung des Abgases mit dielektrisch behinderten Entladungen als nichtthermische Gasentladungen und sind im Reaktor das feste Reduktionsmittel und in weitgehend periodischen Abständen Mittel zur Feldüberhöhung vorhanden. Damit wird nunmehr in geeigneter Weise die dielektrisch behinderte Entladung mit der Reduktion des stickoxidhaltigen Abgases kombiniert.

Bei der Erfindung werden also in nicht-thermischen Gasentladungen bei Atmosphärendruck mit Hilfe von Stillen Entladungen effizient Radikale, aber auch vibrationsangeregte Moleküle erzeugt, deren Lebensdauer im ms-Bereich liegt. Erfahrungsgemäß liegen die Reaktionsraten vibrationsangeregter Moleküle deutlich über denen nichtangeregter, da durch die Vibrationsanregung Energie mitgebracht wird, die bei weitem nicht so schnell in Wärme umgewandelt werden kann wie z.B. die der Rotationsanregung. Diese Energie kann nun genutzt werden, um die Wahrscheinlichkeit für Reaktionen mit einer Schwellenergie unter 1 eV drastisch zu erhöhen. Auch die Adsorption auf Oberflächen kann dadurch gefördert werden.

Bei der erfindungsgemäßen Lösung des Problems der Zersetzung von Stickoxiden in Abgasen zu unschädlichen Produkten kann vorzugsweise ein festes Reduktionsmittel aus natürlichen, kohlenstoffhaltigen Materialien wie z.B. die oben erwähnten Kohlefasern oder aus von Polymeren hergestellte Fasern mit geeigneten elektrischen, thermischen und chemischen Eigenschaften kombiniert mit einer nicht-thermischen Gasentladung bei Atmosphärendruck eingesetzt werden. Die Gasentladung hat dabei den Zweck, durch Anregungsprozesse die heterogene Reduktion der Stickoxide an der Oberfläche des Reduktionsmittels zu initiieren oder zu steuern. Zu diesem Zweck muß gewährleistet sein, daß die Gasentladung in unmittelbarem Kontakt mit dem Reduktionsmittel steht oder daß die Zeit von der Gasentladungs-Anregung des Abgases bis zum Kontakt mit dem Reduktionsmittel kleiner als die Lebensdauer der in der Gasentladung erzeugten Anregung ist. Die Anregung kann z.B. in Form von Radikalbildung, Vibrationsanregung, metastabiler elektronischer Anregung von Molekülen und der Bildung reaktions- oder adsorptionsfreudiger Moleküle vorliegen. Die Lebensdauer dieser Anregungsformen liegt teilweise im Bereich mehrerer Millisekunden. Damit reichen Strömungsprozesse, um das in Gasentladungszonen angeregte Abgas schnell genug zum Reduktionsmittel zu transportieren.

Um die Selektivität des Verfahrens sicherzustellen oder zu erhöhen, kann das Reduktionsmittel zusätzlich mit katalytisch wirksamen Metallen dotiert sein. Je nach Art des Einsatzes kann das Reduktionsmittel statt als Faser auch als massives, zur Erhöhung der Oberfläche mikroporöses Material in Platten- oder Granulatform vorliegen.

Geometrien zur Realisierung dieses Verfahrens sowie weitere Einzelheiten und Vorteile der Erfindung ergeben sich aus den nachfolgend durch Zeichnungen und Erläuterungen beschriebenen Ausführungsbeispielen. Es zeigen die
- FIG 1 bis 6: unterschiedliche Möglichkeiten für den Einsatz fester Reduktionsmittel in Vorrichtungen zur Abgasreinigung nach dem Prinzip der dielektrisch behinderten Entladung in Schnittdarstellung, wobei jeweils gruppenweise alternativ Querschnitte planarer und hohlzylindrischer Anordnungen gezeigt sind, die
- FIG 7und 8: die Längsschnitte zweier rotationssymmetrischer Reaktoren mit zusätzlichen Mitteln zur Feldüberhöhung,
- FIG 9: einen Längsschnitt eines planaren Reaktors mit Mitteln zur Feldüberhöhung und
- FIG 10: ein Abgasreinigungselement aus einzelnen Modulen im Längsschnitt.

Die Figuren werden nachfolgend teilweise gemeinsam beschrieben.

In den einzelnen Figuren sind alternativ koaxiale oder planare Reaktoren zur Erzeugung dielektrisch behinderter Entladungen dargestellt, die hier auch als DBE-Elemente bezeichnet werden. Solche Elemente bestehen nach dem Stand der Technik üblicherweise aus einer ersten metallischen Elektrode 1 und einer Gegenelektrode 2, die mit einem Dielektrikum 3 versehen ist. Zur Generierung der dielektrisch behinderten ("stillen") Entladungen werden die Elektroden an eine Hochspannungsquelle 5 mit sinusförmigen Wechselspannungen oder periodischen Pulsspannungen mit Frequenzen im Bereich 1 kHz bis einige 100 kHz angeschlossen, wobei die Amplitude je nach Schlagweite und/oder Elektrodenform von einigen kV bis zu einigen 10 kV reichen kann.

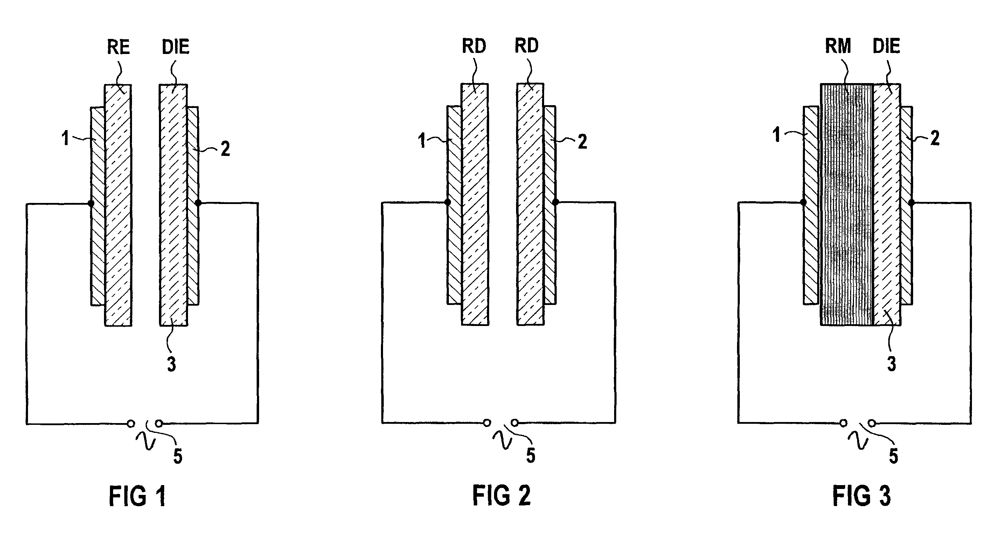

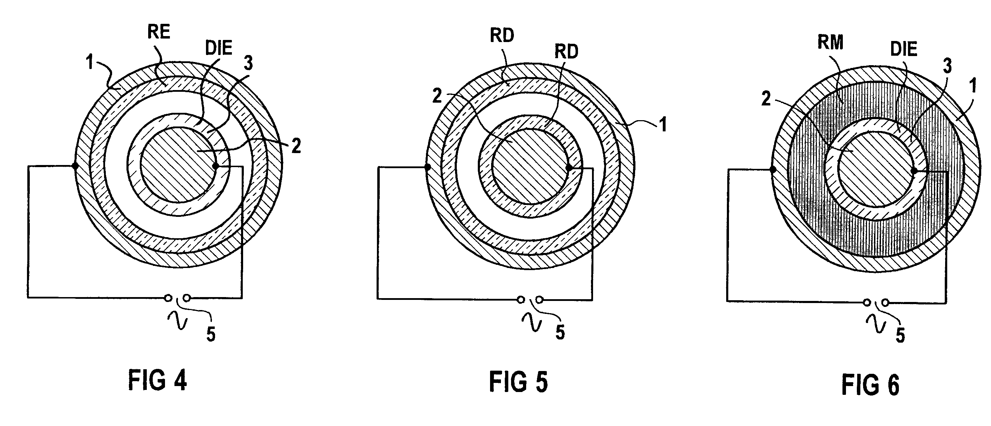

Speziell in den Figuren 1 bis 6 sind koaxiale oder planare Reaktoren zur Erzeugung dielektrisch behinderter Entladungen (DBE) dargestellt, bei denen je nach Leitfähigkeit ein festes Reduktionsmittel entweder als Elektrode (RE), als Dielektrikum (RD) oder als zusätzliche gasdurchlässige Schicht (RM) realisiert ist. Dabei beinhalten die Figuren 1 und 4 die erste Alternative, die Figuren 2 und 5 die zweite Alternative und die Figuren 3 und 6 die dritte Alternative. Bei der ersten Alternative ist das leitfähige Reduktionsmittel RE auf der Elektrode 1 aufgebracht, wobei die Elektrode 2 in bekannter Weise mit der dielektrischen Barriere DIE versehen ist.

Bei der zweiten Alternative gemäß den Figuren 2 und 5 ist auf beiden Elektroden 1 und 2 eine gleichermaßen reduzierend wirkende, dielektrische Barriere RD aufgebracht, während bei der dritten Alternative das reduzierende Material RM eine niedrige Leitfähigkeit hat und gasdurchlässig ist. Speziell bei dieser Alternative wird ein direkter Kontakt von Entladung und Reduktionsmittel erreicht. Allerdings kann bei sauerstoffhaltigen Abgasen bei dieser Alternative ein verstärkter Abbrand des Reduktionsmittels erfolgen.

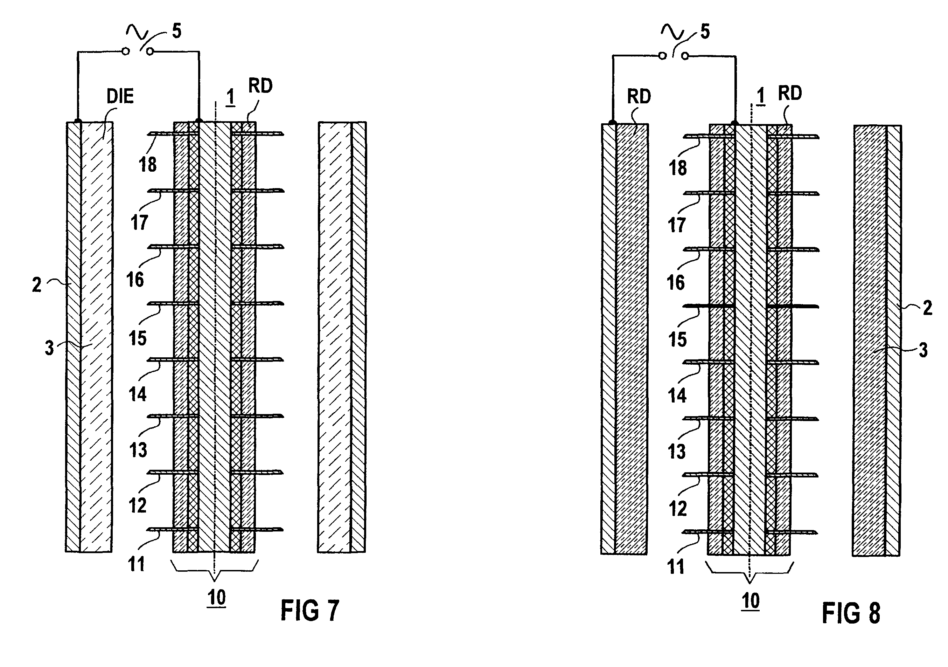

In den Figuren 7 und 8 sind koaxiale DBE-Reaktoren mit zusätzlichen kreisringförmigen Schneidenelektroden 11, 12, ..., 18 zu sich in Flußrichtung des Abgasstromes wiederholenden Unterteilung des Reaktorvolumens in Entladungs- und entladungsfreie Zonen vorhanden. Wie bei den Alternativen gemäß Figur 2 bzw. 5 ist das Reduktionsmittel RD entsprechend seinen elektrischen Eigenschaften entweder in den entladungsfreien Bereichen zwischen den Schneidelektroden 11, 12, ..., 18 oder aber als Dielektrikum auf der zylindrischen Elektrode 2 aufgebracht. Das Abgas wird beim Beispiel gemäß Figur 7 durch turbulente Strömungen effizient mit dem außerhalb des Hauptstromes befindlichen Reduktionsmittel in Kontakt gebracht. Zu berücksichtigen ist dabei, daß das Reduktionsmittel die elektrostatischen Eigenschaften des Reaktors möglichst wenig beeinflußt.

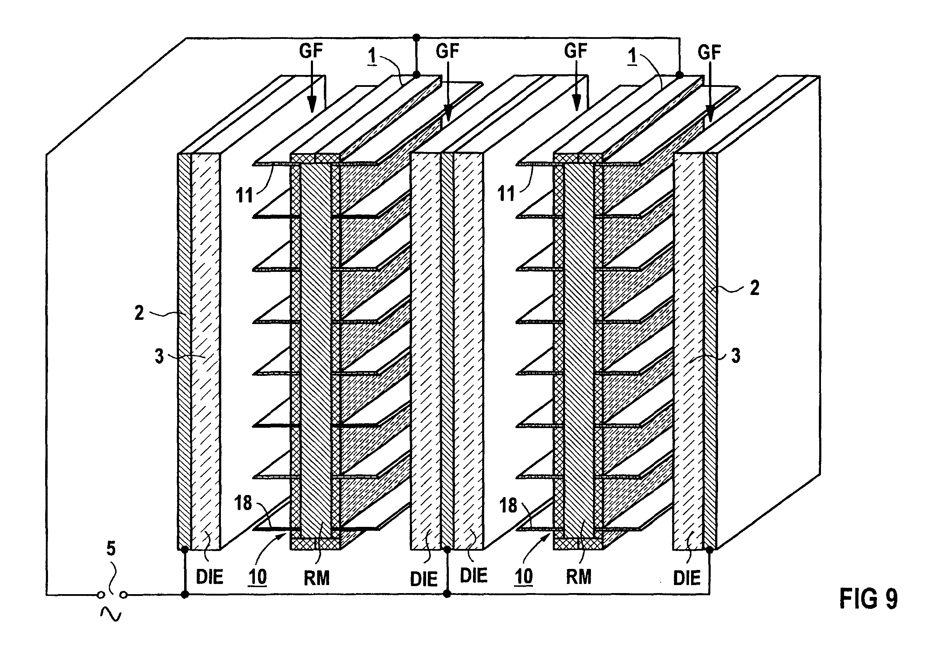

In Figur 9 sind mehrere parallele Entladungsspalte in planarer Geometrie zu einem Reaktor vereinigt, der rechteckförmige Schneidelektroden 11, 12, ... zur sich in Flußrichtung des Abgases GF wiederholenden Unterteilung des Reaktorvolumens in Entladungs- und entladungsfreie Zonen und das Reduktionsmittel RM entweder in den entladungsfreien Bereichen zwischen den Schneidenelektroden 11, 12, ..., 18 oder aber als plattenförmiges Dielektrikum enthält. Auch hier wird das Abgas durch turbulente Strömung effizient mit dem außerhalb des Hauptstromes befindlichen Reduktionsmittel in Kontakt gebracht. Im Unterschied zu den koaxialen Anordnungen gemäß Figur 7 und 8 kann hier das Reduktionsmittel in Form von Platten oder Filzmatten in den Zwischenraum zweier Schneidenelektroden gebracht werden. Dadurch wird die Konstruktion und der Ersatz des Reduktionsmittels bei längerer Verwendung der Anordnung vereinfacht. Wie in Figur 9 im einzelnen dargestellt, lassen sich insbesondere auch durch Parallelschaltung mehrerer planarer Entladungselemente große Strömungsquerschnitte realisieren.

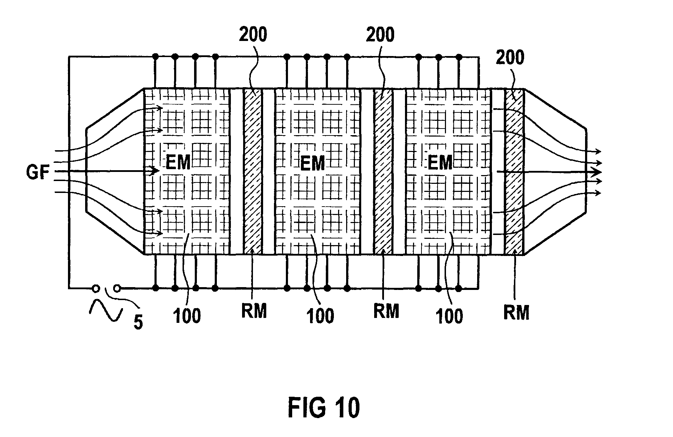

Beim Ausführungsbeispiel gemäß Figur 10 wird aus einzelnen Einheiten eine modular aufgebaute Abgasreinigungsanlage aufgebaut, bei der zusätzlich zur Anordnung in einem einzelnen Modul 100 auch Reduktionsmittel RM als zusätzliche Einheiten 200 zwischen den einzelnen EM-Modulen 100 angeordnet sein können. Eine solche Anordnung ist vor allem sinnvoll, wenn die Produkte der plasmainduzierten Reaktionen von Schadstoffen mit Radikalen in den Entladungsmodulen große Lebensdauern haben oder unter den vorliegenden Bedingungen sogar stabil sind, durch das Reduktionsmittel aber leichter abgebaut werden als die urspünglichen Schadstoffe selbst.

Als Reduktionsmittel können in bekannter Weise insbesondere Kohlefasern verwendet werden, die durch chemische oder physikalische Prozesse modifiziert sind, so daß die reduzierende Wirkung verbessert und in einem weiten Temperatur ermöglicht ist. Dazu sind die Kohlefasern beispielsweise mit Metallen dotiert. Auch andere natürliche kohlestoffhaltige Materialien können als Reduktionsmittel verwendet werden. Das Reduktionsmittel kann auch aus polymer hergestellten Fasern bestehen.

Insbesondere können solche Reduktionsmittel eine hinreichende Leitfähigkeit besitzen und damit als Schicht auf die Elektrode 2 von Figur 1 und 4 aufgebracht gleichermaßen die Elektrode bilden. Hat dagegen das Reduktionsmittel geeignete dielektrische Eigenschaften, kann es entsprechend Figur 2 und 5 gleichermaßen als dielektrische Barriere der zur Erzeugung dielektrisch behinderter Entladung verwendeten Elektrode dienen.

## Patentansprüche

1. Verfahren zur Reduktion von Stickoxiden in Abgasen, insbesondere im Abgas eines Verbrennungsmotors, **da durch gekennzeichnet**, daß das stickoxidhaltige Abgas durch ein mit nichtthermischen Gasentladungen beaufschlagtes Reaktorvolumen strömt und dabei ein- oder mehrmals mit einem festen Reduktionsmittel (RM, RD, RE) in Kontakt gebracht wird, wodurch das Abgas zunächst angeregt wird und anschließend die Stickoxide reduziert werden.

2. Verfahren nach Anspruch 1, **dadurch gekennzeichnet**, daß Kohlefasern als Reduktionsmittel (RM, RE) verwendet werden.

3. Verfahren nach Anspruch 2, **dadurch gekennzeichnet**, daß die Kohlefasern durch chemische oder physikalische Prozesse modifiziert sind, die die reduzierende Wirkung verbessern oder in einem weiteren Temperaturbereich ermöglichen.

4. Verfahren nach Anspruch 2, **dadurch gekennzeichnet**, daß die Kohlefasern mit Metallen dotiert sind, die die reduzierende Wirkung verbessern oder in einem weiteren Temperaturbereich ermöglichen.

5. Verfahren nach Anspruch 1, **dadurch gekennzeichnet**, daß natürliche, kohlenstoffhaltige Materialien als Reduktionsmittel (RM, RD, RE) verwendet werden.

6. Verfahren nach Anspruch 1, **dadurch gekennzeichnet**, daß aus Polymeren hergestellte Fasern als Reduktionsmittel (RM, RD, RE) verwendet werden.

7. Verfahren nach Anspruch 1, **dadurch gekennzeichnet**, daß das Reduktionsmittel eine hinreichende Leitfähigkeit besitzt und gleichermaßen als Elektrode zum Betreiben der Gasentladungen (RE) wirkt.

8. Verfahren nach Anspruch 1, **dadurch gekennzeichnet**, daß das Reduktionsmittel geeignete dielektrische Eigenschaften besitzt und gleichermaßen als Wandmaterial oder als dielektrische Barriere (RD) einer zum Betrieb dielektrisch behinderter Entladungen verwendeten Elektrode dient.

9. Verfahren nach Anspruch 1, **dadurch gekennzeichnet**, daß das Reaktorvolumen ganz oder teilweise mit einem gasdurchlässigen Reduktionsmittel geeigneter dielektrischer Eigenschaften (RM) gefüllt ist.

10. Verfahren nach Anspruch 1 oder einem der Ansprüche 2 bis 9, **dadurch gekennzeichnet**, daß die nichtthermischen Gasentladungen dielektrisch behinderte Entladungen sind.

11. Verfahren nach Anspruch 1 oder einem der Ansprüche 2 bis 9, **dadurch gekennzeichnet**, daß die nichtthermischen Gasentladungen Corona-Entladungen sind.

12. Verfahren nach Anspruch 1 oder einem der Ansprüche 2 bis 9, **dadurch gekennzeichnet**, daß die nichtthermischen Gasentladungen gepulste Hochdruckglimmentladungen sind.

13. Vorrichtung zur Reduktion von Stickoxiden in Abgasen, insbesondere im Abgas eines Verbrennungsmotors, wobei das stickoxidhaltige Abgas durch ein mit nichtthermischen Gasentladungen beaufschlagtes Reaktorvolumen strömt und dabei ein- oder mehrmals mit einem festen Reduktionsmittel in Kontakt gebracht wird, wodurch das Abgas zunächst angeregt und anschließend die Stickoxide reduziert werden, **gekennzeichnet** durch ein Abgasreinigungselement mit einem Reaktor (ARE) zur Beaufschlagung des Abgases mit dielektrisch behinderten Entladungen als nichtthermische Gasentladungen, wobei im Reaktor (ARE) das feste Reduktionsmittel (RM, RD, RE) für das stickoxidhaltige Abgas und in weitgehend periodischen Abständen Mittel (10, 11, 12) zur Feldüberhöhung vorhanden sind.

14. Vorrichtung nach Anspruch 13, **dadurch gekennzeichnet**, daß die Mittel (10) zur Feldüberhöhung in planare Elektrodenstrukturen eingesetzte Scheiben (11, 12, ...) oder in koaxiale Elektrodenstrukturen eingesetzte Scheibenringe (11, 12) sind, deren schneidenförmig ausgebildeter Rand zur weiteren Felderhöhung zusätzlich gezähnt sein kann.

15. Vorrichtung nach einem der Ansprüche 13 oder 14, **dadurch gekennzeichnet** , daß ein komplettes Abgasreinigungselement aus mehreren Einheiten (100, 200) modular aufgebaut ist.

16. Vorrichtung nach Anspruch 15, **dadurch gekennzeichnet**, daß zwischen den einzelnen Modulen (100) feste, gasdurchlässige Reduktionsmittel (RM) als separate Einheiten (200) angeordnet sind.

## Claims

1. A process for reducing nitrogen oxides in exhaust gases, in particular in the exhaust gas from an internal combustion engine, characterised in that the nitrogen oxide-containing exhaust gas flows through a reactor volume to which are applied non-thermal gas discharges while being brought into contact once or several times with a solid reducing agent (RM, RD, RE), whereby the exhaust gas is first excited and the nitrogen oxides are then reduced.

2. A process according to Claim 1, characterised in that carbon fibres are used as reducing agents (RM, RE).

3. A process according to Claim 2, characterised in that the carbon fibres are modified by chemical or physical processes which improve the reducing effect or enable this over a wider temperature range.

4. A process according to Claim 2, characterised in that the carbon fibres are doped with metals which improve the reducing effect or enable this over a wider temperature range.

5. A process according to Claim 1, characterised in that natural carbon-containing materials are used as reducing agents (RM, RD, RE).

6. A process according to Claim 1, characterised in that fibres produced from polymers are used as reducing agents (RM, RD, RE).

7. A process according to Claim 1, characterised in that the reducing agent has sufficient conductivity and also acts as an electrode for producing the gas discharges (RE).

8. A process according to Claim 1, characterised in that the reducing agent has suitable dielectric properties and also acts as a wall material or as a dielectric barrier (RD) on an electrode used to produce dielectric barrier discharges.

9. A process according to Claim 1, characterised in that the reactor volume is entirely or partly filled with a gas-permeable reducing agent with suitable dielectric properties (RM).

10. A process according to Claim 1 or one of Claims 2 to 9, characterised in that the non-thermal gas discharges are dielectric barrier discharges.

11. A process according to Claim 1 or one of Claims 2 to 9, characterised in that the non-thermal gas discharges are corona discharges.

12. A process according to Claim 1 or one of Claims 2 to 9, characterised in that the non-thermal gas discharges are pulsed high-pressure glow discharges.

13. A device for reducing nitrogen oxides in exhaust gases, in particular in the exhaust gas from an internal combustion engine, wherein the nitrogen oxide-containing exhaust gas flows through a reactor volume to which are applied non-thermal gas discharges while being brought into contact once or several times with a solid reducing agent, whereby the exhaust gas is first excited and the nitrogen oxides are then reduced, characterised by an exhaust gas purification element with a reactor (ARE) for applying dielectric barrier discharges as non-thermal gas discharges to the exhaust gas, wherein the reactor (ARE) contains solid reducing agents (RM, RD, RE) for the nitrogen oxide-containing exhaust gas and agents (10, 11, 12) for field enhancement at largely periodic distances.

14. A device according to Claim 13, characterised in that the agents (10) for field enhancement are discs (11, 12, ...) inserted in planar electrode structures or are annular rings (11, 12) inserted in coaxial electrode structures, the blade-like edge of which may also be serrated for further field enhancement.

15. A device according to one of Claims 13 or 14, characterised in that a complete exhaust gas purification element is built up in a modular fashion from several units (100, 200).

16. A device according to Claim 15, characterised in that solid, gas-permeable reducing agents (RM) are arranged as separate units (200) between the individual modules (100).

## Revendications

1. Procédé de réduction d'oxydes d'azote de gaz d'échappement, notamment du gaz d'échappement d'un moteur à combustion interne, caractérisé en ce qu'il consiste à faire passer le gaz d'échappement contenant un oxyde d'azote dans un volume de réacteur soumis à des décharges de gaz non thermiques et à mettre ainsi le gaz d'échappement en contact une fois ou plusieurs fois avec un agent réducteur (RM, RD, RE) solide, ce qui fait que le gaz d'échappement est d'abord excité et qu'ensuite les oxydes d'azote sont réduits.

2. Procédé suivant la revendication 1, caractérisé en ce qu'il consiste à utiliser des fibres de carbone comme agent réducteur (RM, RE).

3. Procédé suivant la revendication 2, caractérisé en ce qu'il consiste à modifier les fibres de carbone par des opérations chimiques ou physiques qui améliorent l'effet réducteur ou qui le permettent dans une plage de températures plus grande.

4. Procédé suivant la revendication 2, caractérisé en ce qu'il consiste à doper les fibres de carbone par des métaux qui améliorent l'effet réducteur ou qui le permettent dans une plage de températures plus grande.

5. Procédé suivant la revendication 1, caractérisé en ce qu'il consiste à utiliser des matériaux naturels carbonacés comme agent réducteur (RM, RD, RE).

6. Procédé suivant la revendication 1, caractérisé en ce qu'il consiste à utiliser des fibres fabriquées à partir de polymères comme agent réducteur (RM, RD, RE).

7. Procédé suivant la revendication 1, caractérisé en ce que l'agent réducteur a une conductivité suffisante et agit en quelque sorte comme électrode pour l'obtention des décharges gazeuses (RE).

8. Procédé suivant la revendication 1, caractérisé en ce que l'agent réducteur a des propriétés diélectriques appropriées et sert en quelque sorte de matériau de paroi ou de barrière (RD) diélectrique d'une électrode utilisée pour obtenir des décharges rendues incomplètes par voie diélectrique.

9. Procédé suivant la revendication 1, caractérisé en ce qu'il consiste à remplir le volume du réacteur en tout ou partie d'un agent réducteur perméable au gaz ayant des propriétés (RM) diélectriques appropriées.

10. Procédé suivant la revendication 1 ou l'une des revendications 2 à 9, caractérisé en ce que les décharges gazeuses non thermiques sont des décharges rendues incomplètes par voie diélectrique.

11. Procédé suivant la revendication 1 ou l'une des revendications 2 à 9, caractérisé en ce que les décharges gazeuses non thermiques sont des décharges corona.

12. Procédé suivant la revendication 1 ou l'une des revendications 2 à 9, caractérisé en ce que les décharges gazeuses non thermiques sont des décharges luminescentes sous haute pression qui sont pulsées.

13. Dispositif de réduction des oxydes d'azote de gaz d'échappement, notamment du gaz d'échappement d'un moteur à combustion interne, le gaz d'échappement contenant de l'oxyde d'azote passant dans un volume de réacteur soumis à des décharges gazeuses non thermiques et étant mis une fois ou plusieurs fois en contact avec un agent réducteur solide de sorte que le gaz d'échappement est d'abord excité et qu'ensuite les oxydes d'azote sont réduits, caractérisé par un élément d'épuration du gaz d'échappement comprenant un réacteur (ARE) pour soumettre le gaz d'échappement à des décharges rendues incomplètes par voie diélectrique en tant que décharges gazeuses non thermiques, avec présence dans le réacteur (ARE) de l'agent réducteur (RM, RD, RE) solide pour le gaz d'échappement contenant de l'oxyde d'azote et à des intervalles essentiellement périodiques de moyens de surélévation du champ.

14. Dispositif suivant la revendication 13, caractérisé en ce que les moyens (10) de surélévation du champ sont des disques (11, 12) insérés dans des structures d'électrode planaires ou des anneaux (11, 12) insérés dans des structures d'électrode coaxiales, dont le bord en forme de lame peut être en outre dentelé pour augmenter encore le champ.

15. Dispositif suivant l'une des revendication 13 ou 14, caractérisé en ce qu'un élément complet d'épuration du gaz d'échappement est constitué de manière modulaire de plusieurs unités (100, 200).

16. Dispositif suivant la revendication 15, caractérisé en ce qu'il est interposé entre les divers modules (100) des agents réducteurs (RM) solides et perméables au gaz en tant qu'unités (200) distinctes.
